# EUROPEAN PATENT SPECIFICATION

(11) **EP 4 266 118 B1**
(45) Date of publication and mention of the grant of the patent: **21.10.2026**
(21) Application number: 21905572.0
(22) Date of filing: 07.12.2021
(51) Int. Cl.: G02F 1/161, G02F 1/153

(54) **ELECTROCHROMIC DEVICE**
ELEKTROCHROME VORRICHTUNG
DISPOSITIF ÉLECTROCHROMIQUE

(30) Priority: 16.12.2020 CN 202011490980
(43) Date of publication of application: 25.10.2023
(73) Proprietor: Shenzhen Guangyi Tech Co., Ltd., Shenzhen, Guangdong 518133 (CN)
(72) Inventor: HE, Jiazhi, Shenzhen, Guangdong 518133 (CN); HU, Guoyang, Shenzhen, Guangdong 518133 (CN); LU, Yanhang, Shenzhen, Guangdong 518133 (CN)
(74) Representative: Ricker, Mathias
(86) International application number: PCT/CN2021/135902
(87) International publication number: WO 2022/127643

(56) References cited:
- CN-A- 110 838 262
- CN-A- 111 128 024
- CN-A- 111 443 545
- CN-A- 111 897 172
- CN-U- 206 653 715
- CN-U- 214 669 989
- KR-A- 20150 117 475
- US-A- 4 773 741
- US-A- 5 216 536
- US-A1- 2004 061 920
- US-A1- 2011 249 314
- US-B1- 10 061 117

## Description

### TECHNICAL FIELD

The present application belongs to the technical field of electrochromism, and relates to an electrochromic device.

### BACKGROUND

The optical properties of electrochromic devices allows for stable and reversible color changes in response to an applied electric field, which has been widely used in the automotive, architectural, and consumer electronics fields.

In the prior art, the silver paste bus bar is generally pre-arranged on the ITO by screen printing on the conductive layer, then the electrochromic layer and ion storage layer are coated on the conductive layer with the screen printed silver paste, and at this point the electrochromic layer or ion storage layer at the edge of the ITO needs to be removed by wiping and then combined to form the electrochromic device. After that, on the periphery side of the electrochromic device, a seal is provided on the surface from which the electrochromic layer or ion storage layer is removed, so as to protect the material inside the electrochromic device from water and oxygen. If the combination is directly carried out without wiping, the seal will be bonded to the electrochromic layer or ion storage layer. The electrochromic layer or ion storage layer has poor mechanical structure and can crack easily, resulting in the seal peeling off easily. Thereby, the moisture is prone to entering the device interior from where the seal peels off, thus damaging the device.

However, there are many problems with wiping. (1) The problem of wiping difficulty: for guaranteeing the stability of the electrochromic film, a certain bonding force between the electrochromic layer/ion storage layer and ITO is required; however, the greater the bonding force, the greater the wiping difficulty, and for example, the electrochromic layer/ion storage layer in the prior art is generally difficult to wipe off; besides, the time consumed by wiping is also increased and the productivity is reduced. (2) The problem of wiping accuracy: in the prior art, the flexible substrate (for example, PET) is generally wiped manually, so it is difficult to ensure that the boundary between wiping region and non-wiping region is straight and uniform, and there is a serious problem of wiping accuracy. In US 2004/0061920 A1 and in US5216536A, there is respectively disclosed an encapsulated electrochromic device and method for making the same.

Therefore, it is expected to provide a method that can solve the problems of wiping and yet ensure a good moisture barrier effect in the art.

### SUMMARY

The present application provides an electrochromic device, which requires no wiping step or reduces the difficulty of wiping, and has good moisture barrier effect.

In an aspect, the present application provides an electrochromic device, and the electrochromic device includes a first substrate layer, a first conductive layer, a solid color-changing layer, a second conductive layer and a second substrate layer stacked in sequence;

a varnish layer is arranged at an edge region of the first conductive layer and/or at an edge region of the second conductive layer, and a dyne value of the varnish layer minus a surface tension of a slurry of a structure layer in the solid color-changing layer is less than or equal to 5 mN/m (such as 5 mN/m, 4.5 mN/m, 4 mN/m, 3 mN/m, 2 mN/m, 1 mN/m, 0 mN/m, -1 mN/m, -2 mN/m, -3 mN/m, etc.), in which the structure layer contacts with the first conductive layer or the second conductive layer.

In the present application, the structural layer, which contacts with the first conductive layer or the second conductive layer, in the solid color-changing layer mainly refers to the ion storage layer or the electrochromic layer in the solid color-changing layer. The slurry of the electrochromic layer is in a mixed form in which a material of the electrochromic layer is dispersed in a solvent; the slurry of the ion storage layer is in a mixed form in which a material of the ion storage layer is dispersed in a solvent.

In the present application, a material of the varnish layer includes, for example, an epoxy acrylate resin, a polyurethane acrylate resin, a polyester acrylate resin, and a mixture thereof.

A material of the electrochromic layer includes but not limited to, for example, tungsten trioxide, poly(decylviologen) and its derivatives, polyaniline and its derivatives, an electrochromic conjugated polymer or an acceptor-containing copolymer. The electrochromic conjugated polymer includes one or a combination of at least two of polypyrrole and its derivatives, polythiophene and its derivatives, poly(3,4-ethylenedioxythiophene) and its derivatives, poly(propylenedioxythiophene) and its derivatives, polyfuran and its derivatives, polyfluorene and its derivatives, polycarbazole and its derivatives, and a copolymer thereof. The acceptor-containing copolymer includes one or a combination of at least two of benzothiadiazole, benzoselenadiazole, benzoxazole, benzotriazole, benzimidazole, quinoxaline, and diketopyrrolopyrrole.

A solvent to dispersing the material of the electrochromic layer includes but not limited to, for example, ethanol, isopropyl alcohol, xylene, toluene, ethyl acetate, acetic acid, acetone, etc. and a mixture thereof.

A material of the ion storage layer includes, for example, one or a combination of at least two of metal oxides or metal complexes formed from an metal element in Group IIIB, Group IVB, Group VB, Group VIB, Group VIIB, Group VIII, Group IB and Group IIB, which can store ions during the electrochemical reaction; preferably, the metal element is selected from Ti, V, Nb, Ta, Cr, Mo, W, Mn, Fe, Co, Ir, Ni, Cu and Zn; preferably, the complex is selected from one or a combination of at least two of Prussian green, Prussian white, Prussian brown, Prussian blue, KFeFe(CN)₆, FeNiHCF, FeHCF, NiHCF or XmYn{Fe(CN)₆}, wherein X is Na⁺ or K⁺, and Y is Fe³⁺ , Co³⁺ , Ni⁺, Mn²⁺, Zn²⁺ or Cu²⁺.

A solvent to dispersing the material of the ion storage layer includes but not limited to, for example, ethanol, isopropyl alcohol, xylene, toluene, ethyl acetate, acetic acid, acetone, etc. and a mixture thereof.

The surface tension of the slurry of the electrochromic layer or the ion storage layer can be adjusted by adjusting the type of solvent, changing the solid content of the electrochromic layer/ion storage layer, adding silica nanoparticles and other means known to those skilled in the art, which will not be elaborated here in the present application.

In the present application, by arranging the varnish layer (which is a solid structural layer) at the edge regions of the first conductive layer and the second conductive layer, and by controlling the difference obtained from subtracting the surface tension of the slurry of the structure layer in the solid color-changing layer, which contacts with the first conductive layer or the second conductive layer, from the dyne value of the varnish layer to be less than or equal to 5 mN/m, due to the surface tension, the slurry of the solid color-changing layer will not adhere to the varnish surface when the solid color-changing layer is coated, and thus the wiping step is skipped directly, avoiding a series of problems brought by wiping; or the adhesion of the solid color-changing layer on the varnish surface is reduced, and at the same time, the boundary of the wiping region is defined by varnish arrangement, guaranteeing the accuracy of wiping.

Preferably, the edge region is a region with a distance from the outer edge of the first conductive layer or the outer edge of the second conductive layer being less than 10 mm, and for example, a region with a distance, such as 9 mm, 8 mm, 7 mm, 6 mm, 5 mm, 4 mm, 3 mm, 2 mm or 1 mm, from the outer edge of the first conductive layer or the outer edge of the second conductive layer.

Preferably, a dyne value of the varnish minus a surface tension of a slurry of a structure layer in the solid color-changing layer is less than or equal to 0 mN/m, in which the structure layer contacts with the first conductive layer or the second conductive layer.

Preferably, a contact angle θ between a slurry of a structure layer in the solid color-changing layer and the varnish layer is more than or equal to 30°, such as 30°, 35°, 38°, 40°, 45°, 50°, 55°, etc., in which the structure layer contacts with the first conductive layer or the second conductive layer. Preferably, a contact angle θ between a slurry of a structure layer in the solid color-changing layer and the varnish layer is more than or equal to 40°, in which the structure layer contacts with the first conductive layer or the second conductive layer. When the θ is more than or equal to 30°, the slurry (for example, EC (electrochromic layer slurry) and/or CE (ion storage layer slurry)) of the structural layer in the solid color-changing layer, which contacts with the first conductive layer or the second conductive layer, can partially cover the varnish when being coated, but the coating bonding is not good and the wiping is not difficult; when the θ is more than or equal to 40°, the slurry (for example, EC and/or CE) of the structural layer in the solid color-changing layer, which contacts with the first conductive layer or the second conductive layer, just slightly covers a small part of the varnish layer or cannot be coated on the varnish layer at all, so that the slurry can be removed easily or even no wiping step is required.

Preferably, conductive lines are arranged on the first conductive layer and the second conductive layer.

Preferably, a width of the varnish layer is more than or equal to a width of the conductive lines, and a thickness of the varnish layer is 1 µm-10 µm; (such as 1 µm, 2 µm, 3 µm, 4 µm, 5 µm, 6 µm, 7 µm, 8 µm, 9 µm or 10 µm). In the present application, if the thickness of the varnish layer is too large, the coating effect of the solid color-changing layer will be affected during device preparation, and the electrochromic layer or the ion storage layer is unable to completely cover the edge of the varnish layer close to the electrochromic layer or the ion storage layer, resulting in the absence of the electrochromic layer or the ion storage layer at that edge.

In the present application, a width of the varnish layer is the distance arranged along the length of the first conductive layer or the second conductive layer.

Preferably, a thickness of the conductive lines is 1 nm-10 µm (such as 1 nm, 3 nm, 5 nm, 10 nm, 30 nm, 50 nm, 100 nm, 300 nm, 500 nm, 800 nm, 1 µm, 2 µm, 3 µm, 4 µm, 5 µm, 6 µm, 7 µm, 8 µm, 9 µm, or 10 µm).

The substrate layer can be a transparent substrate and is an optical grade transparent material, and specifically, a flexible substrate material, including polyester film (Polyester Film, PET), cyclic olefin copolymer or cellulose triacetate, etc.

A material of the conductive layer may be selected from indium-tin oxide ( indium-tin oxide, ITO), aluminum zinc oxide (aluminum zinc oxide, AZO), fluorine doped tin oxide (fluorine doped tin oxide, FTO), silver nanowires, graphene, carbon nanotubes, metal mesh, silver nanoparticles, or other conductive materials.

Preferably, a material of the conductive line may be selected from any one or a combination of at least two of conductive silver paste, conductive copper paste, conductive carbon paste, nano-silver conductive ink, copper foil, copper wire, or conductive film and other conductive materials; the conductive line can also use the same material of the conductive layer, and the material at the conductive line has greater thickness and smaller resistance, so that while the conductive function is guaranteed, the product visual continuity can be increased because the material is transparent.

Preferably, the solid color-changing layer includes an ion storage layer, an ion transfer layer and an electrochromic layer stacked in sequence, the ion storage layer contacts with the first conductive layer, and the electrochromic layer contacts with the second conductive layer.

Preferably, a first varnish layer and a second varnish layer are arranged at the edge region of the first conductive layer and the edge region of the second conductive layer, respectively, the first varnish layer contacts with the ion storage layer, and the second varnish layer contacts with the electrochromic layer.

Preferably, a surface tension of the slurry of the ion storage layer or the electrochromic layer is 15-32 mN/m, such as 15 mN/m, 18 mN/m, 20 mN/m, 22 mN/m, 23 mN/m, 24 mN/m, 25 mN/m, 26 mN/m, 26.5 mN/m, 27 mN/m, 28 mN/m, 29 mN/m, 30 mN/m, 31 mN/m or 32 mN/m. Preferably, a surface tension of the slurry of the ion storage layer or the electrochromic layer is 20-32 mN/m.

Preferably, the first varnish layer and the conductive line on the first conductive layer are arranged side by side with direct contacting, the second varnish layer and the conductive line on the second conductive layer are arranged side by side with direct contacting, the first varnish layer and the second varnish layer are aligned to an edge of the first conductive layer and an edge of the second conductive layer, respectively.

In the present application, in the case where a gap exists between the conductive line and the varnish layer, the gap region can change color, while the varnish region and the conductive line region, on two sides of the gap region, cannot change color. Therefore, during the color-changing process, the color change of the gap region will be very abrupt. In order to reduce this abrupt visual result, the conductive line and the varnish can be arranged to directly contact each other.

Preferably, the first varnish layer and the second varnish layer cover the conductive line on the first conductive layer and the conductive line on the second conductive layer, respectively, and the first varnish layer and the second varnish layer are aligned to an edge of the first conductive layer and an edge of the second conductive layer, respectively.

In the case where the sealing adhesive has the equal width, by arranging the varnish layer on the conductive line, the area that cannot change color is reduced, or in other words, the visible area is increased. Meanwhile, the varnish layer can also protect the conductive line from being corroded.

In the present application, a width d of the varnish layer is less than 25 mm to ensure maximum color-change area.

Preferably, the electrochromic device further includes a seal arranged on the periphery side of the electrochromic device.

Preferably, the seal is a sealing adhesive structure.

In the present application, the sealing adhesive has a good bonding effect with the varnish layer so as to ensure an effective sealing of the electrochromic device, avoiding the detachment of the sealing adhesive resulting in water and oxygen into the material of the electrochromic device. According to the drop test standard, an interfacial pull-off force of the sealing adhesive relative to the varnish surface should be more than 2.0 N/inch, and preferably, an interfacial pull-off force of the sealing adhesive relative to the varnish surface should be more than 4.0 N/inch.

In the present application, the varnish can exert a sealing effect to a certain extent, and thereby, a moisture permeability of the varnish is less than or equal to 15 g/m²/24H under the test conditions of 60°C and 90% RH.

Preferably, the seal includes a structural adhesive layer and a sealing adhesive layer located on the outer side of the structural adhesive layer.

Preferably, a viscosity of the structural adhesive layer is 300-500000 mPa·s.

Preferably, a thixotropic index (TI) is more than or equal to 0.7, such as 0.7, 1.0, 1.5, 1.8, 2.0, 2.2, 2.4, 2.8, 3.0, 3.5, etc.

Preferably, a moisture permeability of the sealing adhesive layer is less than or equal to 15 g/m²/24H under the test conditions of 60°C and 90% RH.

In the present application, a material of the sealing adhesive layer includes but not limited to, for example, polyepoxy acrylate, a polyepoxy resin, urethane acrylate, polyether acrylate, polyester acrylate, a polyacrylic resin, etc., and a mixture containing a prepolymer thereof and a reactive diluent. The reactive diluent includes but not limited to, for example, methacrylates, vinyls, and vinyl ethers, etc., wherein the vinyls include but not limited to styrene, and the methacrylates include but not limited to a mixture of butyl acrylate, isooctyl acrylate, isobornyl acrylate, etc.

A material of the structural adhesive layer includes but not limited to, for example, polyepoxy acrylate, a polyepoxy resin, urethane acrylate, polyether acrylate, polyester acrylate, a polyacrylic resin, etc., and a mixture containing a prepolymer thereof and a reactive diluent. The reactive diluent is mainly a polyfunctional compound, such as methacrylates, vinyls, and vinyl ethers, etc., wherein the methacrylates include but not limited to a mixture of tripropylene glycol diacrylate, hexylene glycol diacrylate, trimethylolpropane triacrylate, etc. Meanwhile, the thixotropy of the adhesive is further improved by adding a tackifier such as nano-scale fumed silica and organic bentonite.

Preferably, the first varnish layer and the conductive line on the first conductive layer are arranged side by side with direct contacting, the second varnish layer and the conductive line on the second conductive layer are arranged side by side with direct contacting, the first varnish layer and the second varnish layer are aligned to an edge of the first conductive layer and an edge of the second conductive layer, respectively, and the seal is located between the first varnish layer and the second varnish layer.

Preferably, the first varnish layer and the second varnish layer cover the conductive line on the first conductive layer and the conductive line on the second conductive layer, respectively, the first varnish layer and the second varnish layer are aligned to an edge of the first conductive layer and an edge of the second conductive layer, and the seal is located between the first varnish layer and the second varnish layer.

Furthermore, the bonding force between the adhesive and the first conductive layer or the second conductive layer can be enhanced by increasing their contact area.

Preferably, the first varnish layer and the second varnish layer cover the conductive line on the first conductive layer and the conductive line on the second conductive layer, respectively, gaps are formed between the first varnish layer and an edge of the first conductive layer and between the second varnish layer and an edge of the second conductive layer, respectively, the seal includes a structural adhesive layer and a sealing adhesive layer located on the outer side of the structural adhesive layer, the structural adhesive layer is located between the first varnish layer and the second varnish layer, part of the sealing adhesive layer is located between the first varnish layer and the second varnish layer, and the other part of the sealing adhesive layer is filled in the gaps.

Preferably, the solid color-changing layer includes an ion storage layer, an ion transfer layer and an electrochromic layer stacked in sequence, the ion storage layer contacts with the first conductive layer, the electrochromic layer contacts with the second conductive layer, the first varnish layer and the second varnish layer cover the conductive line on the first conductive layer and the conductive line on the second conductive layer, respectively, the first varnish layer and the second varnish layer are aligned to an edge of the first conductive layer and an edge of the second conductive layer, respectively, the seal includes a structural adhesive layer and a sealing adhesive layer located on the outer side of the structural adhesive layer, the sealing adhesive layer is located between the first varnish layer and the second varnish layer, part of the structural adhesive layer is located between the first varnish layer and the second varnish layer, and the other part of the structural adhesive layer is located at an edge of the ion transfer layer.

In the present application, the ion transfer layer is preferably a solid ion transfer layer.

In the present application, for preparing electrochromic devices with the above structures, the structural adhesive is pre-arranged on edges of the ITO to form an adhesive frame before coating the electrolyte, then the electrolyte is dropped into the adhesive frame, two ITO layers are combined under vacuum, and after the combination, the electrolyte and the adhesive frame is cured. Hence, the structural adhesive needs to have high viscosity and low fluidity to ensure that the adhesive frame maintains its original shape as much as possible after dispensing the structural adhesive until the sealing adhesive is cured; besides, the structural adhesive is also required to have a certain sealing capacity. Therefore, if only sealing adhesive is arranged, the performance requirements of the sealing adhesive will be very demanding. Therefore, two adhesive layers are arranged, in which the structural adhesive has high viscosity and low fluidity for a supporting effect; and the sealing adhesive has a good water and oxygen barrier performance for a sealing effect.

Preferably, at least one of the first substrate layer and the first conductive layer is a transparent structural layer, and at least one of the second conductive layer and the second substrate layer is a transparent structural layer.

Preferably, the first substrate layer, the first conductive layer, the second conductive layer and the second substrate layer are all transparent structural layers.

In the present application, the electrochromic device is prepared exemplarily by the following preparation methods:
(1) forming the transparent conductive layer on the transparent substrate: the transparent conductive layer is formed on the transparent substrate by magnetron sputtering (or vacuum evaporation deposition, sol-gel and chemical vapor deposition method, etc.);
(2) arranging the conductive line and the varnish layer on the transparent conductive layer: the silver line is formed on the transparent conductive layer by screen printing method; and the varnish layer is formed on the transparent conductive layer by screen printing;
(3) coating the electrochromic layer on the transparent conductive layer: 500 mg of poly(3-hexylthiophene) (P3HT) is dissolved in 10 mL of o-xylene and stirred magnetically for 10 h, then the obtained solution is dropped onto the ITO layer (second transparent conductive layer) deposited on the second transparent substrate and spin-coated to form the electrochromic layer;
(4) coating the ion storage layer on the transparent conductive layer: 500 mg of tungsten trioxide is dissolved in 20 mL of deionized water, stirred and filtered, and then the obtained solution is dropped onto the ITO layer (first transparent conductive layer) deposited on the first transparent substrate and spin-coated to form a tungsten trioxide coating to obtain the ion storage layer;
(5) forming the adhesive frame on the periphery side of the ion storage layer: UV-cured structural adhesive is dispensed at the varnish on the ion storage layer to form a ring-shaped adhesive frame;
(6) preparing the entire electrochromic device: 20wt% by mass of lithium perchlorate, 59.9wt% by mass of methyl methacrylate, 20% by mass of propylene carbonate and 0.1wt% by mass of azobisisobutyronitrile are mixed under vacuum and dropped into the region enclosed by the adhesive frame on the ion storage layer; then the above electrochromic material layer (together with the second substrate layer ) is covered on the electrolyte coating to form a chamber enclosed by the two substrate layers and the adhesive frame together; when the electrolyte is leveled and fills the entire chamber uniformly under pressure, UV curing is performed, and the electrolyte forms an all-solid ion transfer layer, and at the same time, the structural adhesive forms the structural adhesive layer; and
(7) forming the sealing adhesive layer: the adhesive is dispensed on the outer side of the structural adhesive layer and cured to form the sealing adhesive layer.

Compared with the prior art, the present application has the beneficial effects below.

By arranging the varnish layer, the electrochromic device of the present application requires no wiping step for the ion storage layer and/or the electrochromic layer or has reduced wiping difficulty during the preparation process, which greatly reduces the labor cost, avoids the bad products caused by the wiping process, and thus greatly improving the mass production performance of the electrochromic device and the product yield of the electrochromic device; the electrochromic device is further ensured to have good performance.

### BRIEF DESCRIPTION OF DRAWINGS

FIG. 1 is a schematic cross-section diagram of an electrochromic device provided in embodiment 1 of the present application.
FIG. 2 is a schematic cross-section diagram of an electrochromic device provided in embodiment 2 of the present application.
FIG. 3 is a schematic cross-section diagram of an electrochromic device provided in embodiment 3 of the present application.
FIG. 4 is a schematic cross-section diagram of an electrochromic device provided in embodiment 4 of the present application.
FIG. 5 is a schematic cross-section diagram of an electrochromic device provided in embodiment 5 of the present application.
FIG. 6 is a schematic cross-section diagram of an electrochromic device provided in embodiment 6 of the present application.
FIG. 7 is a schematic cross-section diagram of an electrochromic device provided in embodiment 7 of the present application.
FIG. 8 is a schematic cross-section diagram of an electrochromic device provided in embodiment 10 of the present application.

In the figures, 1-first transparent substrate layer, 2-first transparent conductive layer, 3-ion storage layer, 4-ion transfer layer, 5-electrochromic layer, 6-second transparent conductive layer, 7-second transparent substrate layer, 8-silver line, 9-varnish layer, 91-first varnish layer, 92-second varnish layer, 10-seal, 11-structural adhesive layer, 12-sealing adhesive layer.

### DETAILED DESCRIPTION

The technical solutions of the present application are further described below through embodiments. It should be apparent to those skilled in the art that the embodiments are only used for a better understanding of the present application and should not be regard as a specific limitation of the present application.

### Embodiment 1

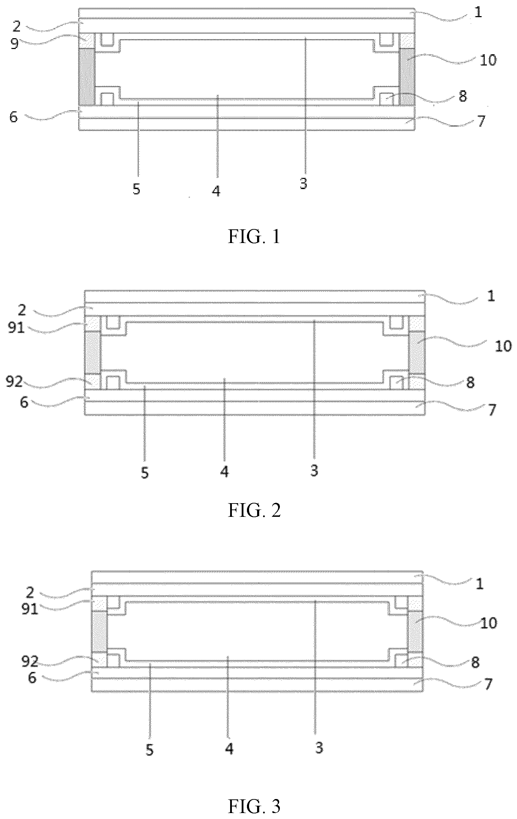

An electrochromic device is provided in this embodiment. As shown in FIG. 1, the electrochromic device includes a first transparent substrate layer 1, a first transparent conductive layer 2, an ion storage layer 3, an ion transfer layer 4, an electrochromic layer 5, a second transparent conductive layer 6 and a second transparent substrate layer 7 stacked in sequence; silver lines 8 are arranged on the first transparent conductive layer and the second transparent conductive layer, a varnish layer 9 is arranged at an edge region of the first transparent conductive layer, and a seal 10 is arranged on the periphery side of the electrochromic device. As shown in FIG. 1, the varnish layer 9 and the silver line 8 on the first transparent conductive layer are arranged side by side without contacting, and there exists a gap between the two; the varnish layer 9 is aligned to an edge of the first transparent conductive layer 2; the seal 10 is located between the varnish layer 9 and the second transparent conductive layer 6.

In the electrochromic device provided in this embodiment, a difference obtained by subtracting a surface tension of a slurry of the ion storage layer from a dyne value of the varnish layer is 5 mN/m, and a contact angle θ between the slurry of the ion storage layer and the varnish layer is 30.2°. The silver lines have a thickness of 10 µm and a width of 20 mm, and the varnish layer has a width of 25 mm and a thickness of 10 µm.

For the electrochromic device in this embodiment, by pre-arranging the varnish layer 9 at the edge of the first transparent conductive layer 2 before coating the ion storage layer, the ion storage layer 3 has a small adhesive force on the varnish surface when being coated on the first conductive layer due to the surface tension. Hence, although the ion storage layer 3 is coated onto the varnish layer 9, the wiping difficulty is significantly reduced compared with the case where no varnish layer is arranged, and the boundary of the wiping region is accurately defined, avoiding the accuracy problem brought by wiping.

In order to illustrate the affection on the coating effect from the difference obtained by subtracting the surface tension of a slurry of the ion storage layer from the dyne value of the varnish layer, different varnish dyne value, EC slurry/CE slurry surface tension and contact angle θ are selected for verification in this embodiment, and the results are shown in Table 1.

**Table 1**

| Experimental Group | EC Slurry/CE Slurry Surface Tension (mN/m) | Varnish Dyne Value (mN/m) | Contact Angle θ (°) | Coating Effect | Wiping Difficulty |
|---|---|---|---|---|---|
| 1 | 20 | 20 | 41.5 | Without coating | No wiping required |
| 2 | 20 | 25 | 31.8 | With coating partially | Easy to wipe |
| 3 | 20 | 26 | 29.3 | With coating | Hard to wipe |
| 4 | 24 | 24 | 41.1 | Without coating | No wiping required |
| 5 | 24 | 29 | 31.1 | With coating partially | Easy to wipe |
| 6 | 24 | 30 | 29.5 | With coating | Hard to wipe |
| 7 | 26 | 26 | 40.1 | With coating slightly | Easy to wipe |
| 8 | 26 | 31 | 30.8 | With coating partially | Easy to wipe |
| 9 | 26 | 32 | 29.2 | With coating | Hard to wipe |
| 10 | 28 | 24 | 48 | Without coating | No wiping required |
| 11 | 28 | 26 | 44.5 | Without coating | No wiping required |
| 12 | 28 | 28 | 40.3 | With coating slightly | Easy to wipe |
| 13 | 28 | 33 | 30.2 | With coating partially | Easy to wipe |
| 14 | 28 | 34 | 28.4 | With coating | Hard to wipe |
| 15 | 32 | 31 | 42.3 | Without coating | No wiping required |
| 16 | 32 | 37 | 30 | With coating partially | Easy to wipe |
| 17 | 32 | 38 | 27.9 | With coating | Hard to wipe |

### Embodiment 2

An electrochromic device is provided in this embodiment. As shown in FIG. 2, the electrochromic device includes a first transparent substrate layer 1, a first transparent conductive layer 2, an ion storage layer 3, an ion transfer layer 4, an electrochromic layer 5, a second transparent conductive layer 6 and a second transparent substrate layer 7 stacked in sequence; silver lines 8 are arranged on the first transparent conductive layer 2 and the second transparent conductive layer 6, a first varnish layer 91 and a second varnish layer 92 are arranged at an edge region of the first transparent conductive layer 2 and an edge region of the second transparent conductive layer 6, respectively, and a seal 10 is arranged on the periphery side of the electrochromic device. As shown in FIG. 2, the first varnish layer 91 and the silver line 8 on the first transparent conductive layer 2 are arranged side by side without contacting, the second varnish layer 92 and the silver line 8 on the second transparent conductive layer 6 are arranged side by side without contacting, and there exists a gap between the two, respectively; the first varnish layer 91 and the second varnish layer 92 are aligned to an edge of the first transparent conductive layer 2 and an edge of the second transparent conductive layer 6, respectively; the seal 10 is located between the first varnish layer 91 and the second varnish layer 92.

In the electrochromic device provided in this embodiment, a difference obtained by subtracting a surface tension of a slurry of the ion storage layer from a dyne value of the varnish layer is 0 mN/m, and a contact angle θ between the slurry of the ion storage layer and the varnish layer is 40.1°. The silver lines have a thickness of 0.5 µm and a width of 0.01 mm, and the varnish layer has a width of 0.5 mm and a thickness of 1 µm.

For the electrochromic device in this embodiment, by pre-arranging the first varnish layer 91 at the edge of the first transparent conductive layer 2 and pre-arranging the second varnish layer 92 at the edge of the second transparent conductive layer 6 before coating the ion storage layer 3 and the electrochromic layer 5, when the ion storage layer 3 is coated on the first conductive layer and the electrochromic layer 5 is coated on the second conductive layer, due to the surface tension, the edge of the ion storage layer 3 will shrink almost completely on the first varnish layer 91, and the edge of the electrochromic layer 5 will shrink almost completely on the second varnish layer 92, so that the ion storage layer 3 barely covers the first varnish layer 91, and the electrochromic layer 5 barely covers the second varnish layer 92. Hence, the wiping difficulty is reduced, and the boundary of the wiping region is accurately defined, avoiding the accuracy problem brought by wiping.

### Embodiment 3

An electrochromic device is provided in this embodiment. As shown in FIG. 3, the electrochromic device includes a first transparent substrate layer 1, a first transparent conductive layer 2, an ion storage layer 3, an ion transfer layer 4, an electrochromic layer 5, a second transparent conductive layer 6 and a second transparent substrate layer 7 stacked in sequence; silver lines 8 are arranged on the first transparent conductive layer 2 and the second transparent conductive layer 6, a first varnish layer 91 and a second varnish layer 92 are arranged at an edge region of the first transparent conductive layer 2 and an edge region of the second transparent conductive layer 6, respectively, and a seal 10 is arranged on the periphery side of the electrochromic device. As shown in FIG. 3, the first varnish layer 91 and the silver line 8 on the first transparent conductive layer 2 are arranged side by side with direct contacting, and the second varnish layer 92 and the silver line 8 on the second transparent conductive layer 6 are arranged side by side with direct contacting; the first varnish layer 91 and the second varnish layer 92 are aligned to an edge of the first transparent conductive layer 2 and an edge of the second transparent conductive layer 6, respectively; the seal 10 is located between the first varnish layer 91 and the second varnish layer 92.

In the electrochromic device provided in this embodiment, a difference obtained by subtracting a surface tension of a slurry of the ion storage layer from a dyne value of the varnish layer is -2 mN/m, and a contact angle θ between the slurry of the ion storage layer and the varnish layer is 44.5°. The silver lines have a thickness of 1 µm and a width of 0.5 mm, and the varnish layer has a width of 1 mm and a thickness of 5 µm.

For the electrochromic device in this embodiment, by pre-arranging the first varnish layer 91 at the edge of the first transparent conductive layer 2 and pre-arranging the second varnish layer 92 at the edge of the second transparent conductive layer 6 before coating the ion storage layer 3 and the electrochromic layer 5, when the ion storage layer 3 is coated on the first conductive layer and the electrochromic layer 5 is coated on the second conductive layer, due to the surface tension, the edge of the ion storage layer 3 will shrink from the first varnish layer 91 to the inner boundary of the first varnish layer 91, and the edge of the electrochromic layer 5 will shrink from the second varnish layer 92 to the inner boundary of the second varnish layer 92, so that the ion storage layer 3 will not be coated on the first varnish layer 91, and the electrochromic layer 5 will not be coated on the second varnish layer 92. Hence, the step for wiping the edges of the ion storage layer 3 and the electrochromic layer 5 can be skipped, avoiding a series of problems brought by wiping. Additionally, because the first varnish layer 91 and the silver line 8 on the first transparent conductive layer 2 are arranged side by side with direct contacting, and the second varnish layer 92 and the silver line 8 on the second transparent conductive layer 6 are arranged side by side with direct contacting, the abrupt visual effect, which is caused by the color changing of the gap between the varnish layer and the conductive line, is also avoided.

### Embodiment 4

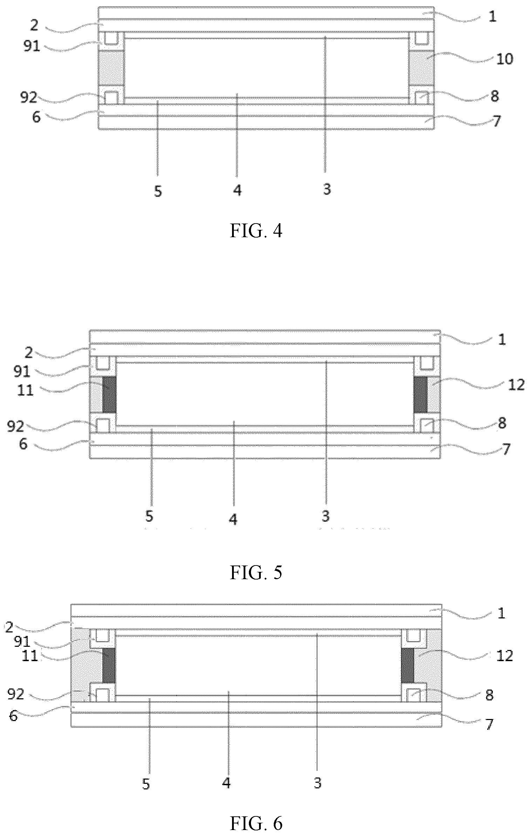

An electrochromic device is provided in this embodiment. As shown in FIG. 4, the electrochromic device includes a first transparent substrate layer 1, a first transparent conductive layer 2, an ion storage layer 3, an ion transfer layer 4, an electrochromic layer 5, a second transparent conductive layer 6 and a second transparent substrate layer 7 stacked in sequence; silver lines 8 are arranged on the first transparent conductive layer 2 and the second transparent conductive layer 6, a first varnish layer 91 and a second varnish layer 92 are arranged at an edge region of the first transparent conductive layer 2 and an edge region of the second transparent conductive layer 6, respectively, and a seal 10 is arranged on the periphery side of the electrochromic device. As shown in FIG. 4, the first varnish layer 91 and the second varnish layer 92 cover the conductive line on the first conductive layer and the conductive line on the second conductive layer, respectively; the first varnish layer 91 and the second varnish layer 92 are aligned to an edge of the first conductive layer and an edge of the second conductive layer, respectively; the seal 10 is located between the first varnish layer and the second varnish layer.

In the electrochromic device provided in this embodiment, a difference obtained by subtracting a surface tension of a slurry of the ion storage layer from a dyne value of the varnish layer is -2 mN/m, and a contact angle θ between the slurry of the ion storage layer and the varnish layer is 44.5°. The silver lines have a thickness of 2 µm and a width of 1 mm, and the varnish layer has a width of 3 mm and a thickness of 3 µm.

In the case where the sealing adhesive has the equal width, by arranging the varnish layer on the conductive line, the electrochromic device in this embodiment further has, in addition to the beneficial effects of Embodiment 3, reduced area of the peripheral side of the electrochromic device that cannot change color, or in other words, increased color-changing visible area. Meanwhile, the varnish layer can also protect the conductive line from being oxidized to a certain extent.

### Embodiment 5

An electrochromic device is provided in this embodiment. As shown in FIG. 5, the electrochromic device includes a first transparent substrate layer 1, a first transparent conductive layer 2, an ion storage layer 3, an ion transfer layer 4, an electrochromic layer 5, a second transparent conductive layer 6 and a second transparent substrate layer 7 stacked in sequence; silver lines 8 are arranged on the first transparent conductive layer 2 and the second transparent conductive layer 6, a first varnish layer 91 and a second varnish layer 92 are arranged at an edge region of the first transparent conductive layer 2 and an edge region of the second transparent conductive layer 6, respectively, a seal 10 is arranged on the peripheral side of the electrochromic device, and the seal 10 includes a structural adhesive layer 11 and a sealing adhesive layer 12 located on the outer side of the structural adhesive layer. As shown in FIG. 5, the first varnish layer 91 and the second varnish layer 92 cover the conductive line on the first conductive layer and the conductive line on the second conductive layer, respectively; the first varnish layer 91 and the second varnish layer 92 are aligned to an edge of the first transparent conductive layer 2 and an edge of the second transparent conductive layer 6, respectively; the seal 10 is located between the first varnish layer 91 and the second varnish layer 92.

In the electrochromic device provided in this embodiment, a difference obtained by subtracting a surface tension of a slurry of the ion storage layer from a dyne value of the varnish layer is -2 mN/m, and a contact angle θ between the slurry of the ion storage layer and the varnish layer is 44.5°. The silver lines have a thickness of 2 µm and a width of 1 mm, and the varnish layer has a width of 3 mm and a thickness of 3 µm.

In addition to having the beneficial effects of Embodiment 4, the electrochromic device in this embodiment further improves the process production stability and the sealing effect by arranging the structure of two adhesive layers. The structural adhesive has high viscosity and low fluidity. After coating the ion storage layer 3 and the electrochromic layer 5, the structural adhesive layer 11 formed by the structural adhesive is first arranged on the surface of the first varnish layer 91 or on the surface of the second varnish layer 92, which thereby supports the electrochromic device structurally and limits the electrolyte arrangement range; finally, the sealing adhesive layer 12 is formed on the outer side of the structural adhesive layer 11, and the sealing adhesive has good water and oxygen barrier performance, which can further improve the sealing effect of the electrochromic device, and at the same time can reduce the sealing requirement on structural adhesive, greatly improving the feasibility of the process and saving the cost.

### Embodiment 6

An electrochromic device is provided in this embodiment. As shown in FIG. 6, the electrochromic device includes a first transparent substrate layer 1, a first transparent conductive layer 2, an ion storage layer 3, an ion transfer layer 4, an electrochromic layer 5, a second transparent conductive layer 6 and a second transparent substrate layer 7 stacked in sequence; silver lines 8 are arranged on the first transparent conductive layer 2 and the second transparent conductive layer 6, a first varnish layer 91 and a second varnish layer 92 are arranged at an edge region of the first transparent conductive layer 2 and an edge region of the second transparent conductive layer 6, respectively, a seal 10 is arranged on the peripheral side of the electrochromic device, and the seal 10 includes a structural adhesive layer 11 and a sealing adhesive layer 12 located on the outer side of the structural adhesive layer. As shown in FIG. 6, the first varnish layer 91 and the second varnish layer 92 cover the conductive line on the first conductive layer and the conductive line on the second conductive layer, respectively; the first varnish layer 91 and the second varnish layer 92 are aligned to an edge of the first transparent conductive layer 2 and an edge of the second transparent conductive layer 6, respectively; the structural adhesive layer is located between the first varnish layer and the second varnish layer, part of the sealing adhesive layer is located between the first varnish layer and the second varnish layer, and the other part of the sealing adhesive layer is filled in the gap.

In the electrochromic device provided in this embodiment, a difference obtained by subtracting a surface tension of a slurry of the ion storage layer from a dyne value of the varnish layer is -2 mN/m, and a contact angle θ between the slurry of the ion storage layer and the varnish layer is 44.5°. The silver lines have a thickness of 2 µm and a width of 1 mm, and the varnish layer has a width of 3 mm and a thickness of 3 µm.

In addition to having the beneficial effects of Embodiment 5, the electrochromic device in this embodiment has increased contact area of the sealing adhesive layer 12 with the first conductive layer and the second conductive layer by arranging the sealing adhesive layer 12 partly between the first varnish layer 91 and the second varnish layer 92 and partly between the first transparent conductive layer 2 and the second transparent conductive layer 6, which thereby further enhances the sealing effect of the seal on the electrochromic device.

### Embodiment 7

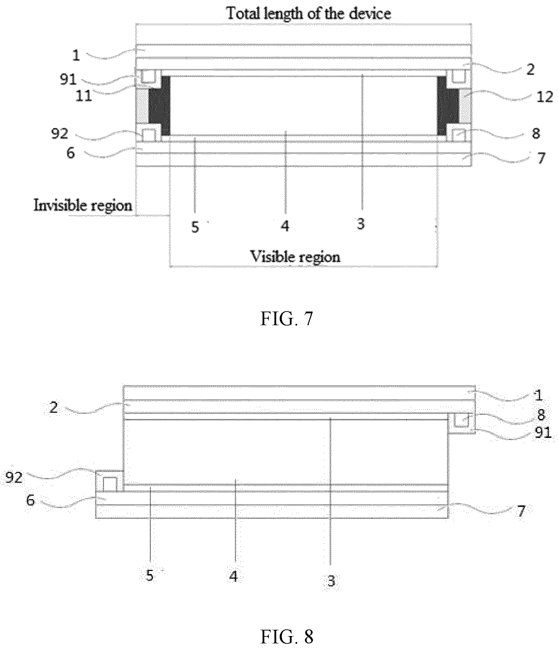

An electrochromic device is provided in this embodiment. As shown in FIG. 7, the electrochromic device includes a first transparent substrate layer 1, a first transparent conductive layer 2, an ion storage layer 3, an ion transfer layer 4, an electrochromic layer 5, a second transparent conductive layer 6 and a second transparent substrate layer 7 stacked in sequence; silver lines 8 are arranged on the first transparent conductive layer 2 and the second transparent conductive layer 6, a first varnish layer 91 and a second varnish layer 92 are arranged at an edge region of the first transparent conductive layer 2 and an edge region of the second transparent conductive layer 6, respectively, a seal 10 is arranged on the peripheral side of the electrochromic device, and the seal 10 includes a structural adhesive layer 11 and a sealing adhesive layer 12 located on the outer side of the structural adhesive layer 11. As shown in FIG. 7, the first varnish layer 91 and the second varnish layer 92 cover the conductive line on the first conductive layer and the conductive line on the second conductive layer, respectively; the first varnish layer 91 and the second varnish layer 92 are aligned to an edge of the first transparent conductive layer 2 and an edge of the second transparent conductive layer 6, respectively; the sealing adhesive layer 12 is located between the first varnish layer 91 and the second varnish layer 92, part of the structural adhesive layer 11 is located between the first varnish layer 91 and the second varnish layer 92, and the other part of the structural adhesive layer 11 is located at an edge of the ion transfer layer 4.

As shown in FIG. 7, along the total length of the device, a region corresponding to the electrochromic layer 5 forms a visible region and a region corresponding to the seal 10 forms an invisible region.

In the electrochromic device provided in this embodiment, a difference obtained by subtracting a surface tension of a slurry of the ion storage layer from a dyne value of the varnish layer is -2 mN/m, and a contact angle θ between the slurry of the ion storage layer and the varnish layer is 44.5°. The silver lines have a thickness of 2 µm and a width of 1 mm, and the varnish layer has a width of 3 mm and a thickness of 3 µm.

In addition to having the beneficial effects of Embodiment 4, the electrochromic device in this embodiment further improves the process production stability and the sealing effect by arranging the structure of two adhesive layers. The structural adhesive has high viscosity and low fluidity. After coating the ion storage layer 3 and the electrochromic layer 5, the structural adhesive layer 11 formed by the structural adhesive is first arranged on the surface of the first varnish layer 91 or on the surface of the second varnish layer 92, which thereby supports the electrochromic device structurally and limits the electrolyte arrangement range; finally, the sealing adhesive layer 12 is formed on the outer side of the structural adhesive layer 11, and the sealing adhesive has good water and oxygen barrier performance, which can further improve the sealing effect of the electrochromic device, and at the same time can reduce the sealing requirement on structural adhesive, greatly improving the feasibility of the process and saving the cost.

### Embodiment 8

The difference from Embodiment 1 is that the first transparent substrate layer 1 is replaced with an opaque first substrate layer 1.

### Embodiment 9

The difference from Embodiment 1 is that the seal 10 is replaced with a structural adhesive layer 11 at the inner side and a sealing adhesive layer 12 at the outer side.

### Embodiment 10

An electrochromic device is provided in this embodiment. As shown in FIG. 8, the electrochromic device includes a first transparent substrate layer 1, a first transparent conductive layer 2, an ion storage layer 3, an ion transfer layer 4, an electrochromic layer 5, a second transparent conductive layer 6 and a second transparent substrate layer 7 stacked in sequence; a first varnish layer 91 is arranged at an edge region of the first transparent conductive layer 2, and a second varnish layer 92 is arranged at an edge region of the second transparent conductive layer 6.

In the electrochromic device provided in this embodiment, a difference obtained by subtracting a surface tension of a slurry of the ion storage layer from a dyne value of the varnish layer is -2 mN/m, and a contact angle θ between the slurry of the ion storage layer and the varnish layer is 44.5°. The silver lines have a thickness of 2 µm and a width of 1 mm, and the varnish layer has a width of 3 mm and a thickness of 3 µm.

For the electrochromic device in this embodiment, by pre-arranging the first varnish layer 91 at the edge of the first transparent conductive layer 2 and pre-arranging the second varnish layer 92 at the edge of the second transparent conductive layer 6 before coating the ion storage layer 3 and the electrochromic layer 5, when the ion storage layer 3 is coated on the first conductive layer and the electrochromic layer 5 is coated on the second conductive layer, due to the surface tension, the edge of the ion storage layer 3 will shrink from the first varnish layer 91 to the inner boundary of the first varnish layer 91, and the edge of the electrochromic layer 5 will shrink from the second varnish layer 92 to the inner boundary of the second varnish layer 92, so that the ion storage layer 3 will not be coated on the first varnish layer 91, and the electrochromic layer 5 will not be coated on the second varnish layer 92. Hence, the step for wiping the edges of the ion storage layer 3 and the electrochromic layer 5 can be skipped, avoiding a series of problems brought by wiping.

The applicant has stated that although the above embodiments are used to illustrate the process of the present application, the present application is not limited to the above process steps, which means that the present application is not necessarily rely on the above process steps to be implemented. It should be apparent to those skilled in the art that any improvements made to the present application, equivalent replacements of raw materials selected in the present application and addition of adjuvant ingredients thereof, selections of specific methods, etc., all fall within the protection scope of the appended claims.

## Claims

1. An electrochromic device, comprising a first substrate layer (1),
a first conductive layer (2), a solid color-changing layer, a second conductive layer (6) and a second substrate layer (7) stacked in sequence; wherein a structure layer (3; 4) in the solid color-changing layer contacts the first conductive layer (2) or the second conductive layer (6), and
a varnish layer (9; 91; 92) is arranged at an edge region of the first conductive layer (2) and/or at an edge region of the second conductive layer (6), **characterised in that** a dyne value of the varnish layer (9) minus a surface tension of a slurry of the structure layer (3; 4) in the solid color-changing layer is less than or equal to 5 mN/m.

2. The electrochromic device according to claim 1, wherein the edge region is a region with a distance from the outer edge of the first conductive layer or the outer edge of the second conductive layer being less than 10 mm.

3. The electrochromic device according to claim 1 or 2, wherein a dyne value of the varnish layer (9) minus a surface tension of a slurry of a structure layer in the solid color-changing layer is less than or equal to 0 mN/m, wherein the structure layer contacts with the first conductive layer or the second conductive layer.

4. The electrochromic device according to any one of claims 1 to 3, wherein a contact angle θ between a slurry of a structure layer in the solid color-changing layer and the varnish layer (9) is more than or equal to 30°, wherein the structure layer contacts with the first conductive layer or the second conductive layer.

5. The electrochromic device according to any one of claims 1 to 4, wherein a contact angle θ between a slurry of a structure layer in the solid color-changing layer and the varnish layer (9) is more than or equal to 40°, wherein the structure layer contacts with the first conductive layer or the second conductive layer.

6. The electrochromic device according to any one of claims 1 to 5, wherein conductive lines are arranged on the first conductive layer and the second conductive layer.

7. The electrochromic device according to any one of claims 1 to 6, wherein, a width of the varnish layer (9) is more than or equal to a width of the conductive lines, and a thickness of the varnish layer (9) is 1 µm-10 µm.

8. The electrochromic device according to any one of claims 1 to 7, wherein, a width of the varnish layer (9) is more than or equal to a width of the conductive lines and less than or equal to 25 mm.

9. The electrochromic device according to any one of claims 1 to 8, wherein the solid color-changing layer comprises an ion storage layer (3), an ion transfer layer (4) and an electrochromic layer (5) stacked in sequence, the ion storage layer (3) contacts with the first conductive layer and the electrochromic layer contacts with the second conductive layer;
and, a first varnish layer (91) and a second varnish layer (92) are arranged at the edge region of the first conductive layer and the edge region of the second conductive layer, respectively, the first varnish layer (91) contacts with the ion storage layer (3), and the second varnish layer (92) contacts with the electrochromic layer.

10. The electrochromic device according to claim 9, wherein the first varnish layer (91) and the conductive line on the first conductive layer are arranged side by side with direct contacting, the second varnish layer (92) and the conductive line on the second conductive layer are arranged side by side with direct contacting, and the first varnish layer (91) and the second varnish layer (92) are aligned to an edge of the first conductive layer and an edge of the second conductive layer, respectively;
or, the first varnish layer (91) and the second varnish layer (92) cover the conductive line on the first conductive layer and the conductive line on the second conductive layer, respectively, and the first varnish layer (91) and the second varnish layer (92) are aligned to an edge of the first conductive layer and an edge of the second conductive layer, respectively.

11. The electrochromic device according to claim 9, wherein the electrochromic device further comprises a seal (10) arranged on the peripheral side of the electrochromic device.

12. The electrochromic device according to claim 11, wherein, the seal (10) comprises a structural adhesive layer (11) and a sealing adhesive layer (12) located on the outer side of the structural adhesive layer (11).

13. The electrochromic device according to claim 11, wherein the first varnish layer (91) and the conductive line on the first conductive layer are arranged side by side with direct contacting, the second varnish layer (92) and the conductive line on the second conductive layer are arranged side by side with direct contacting, the first varnish layer (91) and the second varnish layer (92) are aligned to an edge of the first conductive layer and an edge of the second conductive layer, respectively, and the seal (10) is located between the first varnish layer (91) and the second varnish layer (92);
or, the first varnish layer (91) and the second varnish layer (92) cover the conductive line on the first conductive layer and the conductive line on the second conductive layer, respectively, the first varnish layer (91) and the second varnish layer (92) are aligned to an edge of the first conductive layer and an edge of the second conductive layer, and the seal (10) is located between the first varnish layer (91) and the second varnish layer (92).

14. The electrochromic device according to claim 11, wherein the first varnish layer (91) and the second varnish layer (92) cover the conductive line on the first conductive layer and the conductive line on the second conductive layer, respectively, gaps are formed between the first varnish layer (91) and an edge of the first conductive layer and between the second varnish layer (92) and an edge of the second conductive layer, respectively, the seal (10) comprises a structural adhesive layer (11) and a sealing adhesive layer (12) located on the outer side of the structural adhesive layer (11), the structural adhesive layer (11) is located between the first varnish layer (91) and the second varnish layer (92), part of the sealing adhesive layer (12) is located between the first varnish layer (91) and the second varnish layer (92), and the other part of the sealing adhesive layer (12) is filled in the gaps;
or, the solid color-changing layer comprises an ion storage layer (3), an ion transfer layer (4) and an electrochromic layer (5) stacked in sequence, the ion storage layer (3) contacts with the first conductive layer, the electrochromic layer (5) contacts with the second conductive layer, the first varnish layer (91) and the second varnish layer (92) cover the conductive line on the first conductive layer and the conductive line on the second conductive layer, respectively, the first varnish layer (91) and the second varnish layer (92) are aligned to an edge of the first conductive layer and an edge of the second conductive layer, respectively, the seal (10) comprises a structural adhesive layer (11) and a sealing adhesive layer (12) located on the outer side of the structural adhesive layer (11), the sealing adhesive layer (12) is located between the first varnish layer (91) and the second varnish layer (92), part of the structural adhesive layer (11) is located between the first varnish layer (91) and the second varnish layer (92), and the other part of the structural adhesive layer (11) is located at an edge of the ion transfer layer (4).

15. The electrochromic device according to any one of claims 1 to 14, wherein at least one of the first substrate layer and the first conductive layer is a transparent structural layer, and at least one of the second conductive layer and the second substrate layer is a transparent structural layer.

## Patentansprüche

1. Elektrochrome Vorrichtung, umfassend eine erste Substratschicht (1), eine erste leitfähige Schicht (2), eine feste farbveränderliche Schicht, eine zweite leitfähige Schicht (6) und eine zweite Substratschicht (7), die nacheinander gestapelt sind, wobei eine Strukturschicht (3; 4) in der festen farbveränderlichen Schicht die erste leitfähige Schicht (2) oder die zweite leitfähige Schicht (6) berührt und
eine Lackschicht (9; 91; 92) an einem Randbereich der ersten leitfähigen Schicht (2) und/oder an einem Randbereich der zweiten leitfähigen Schicht (6) angeordnet ist, **dadurch gekennzeichnet, dass** ein Dyne-Wert der Lackschicht (9) minus eine Oberflächenspannung einer Aufschlämmung der Strukturschicht (3; 4) in der festen farbveränderlichen Schicht kleiner oder gleich 5 mN/m ist.

2. Elektrochrome Vorrichtung nach Anspruch 1, wobei der Randbereich ein Bereich mit einem Abstand vom äußeren Rand der ersten leitfähigen Schicht oder dem äußeren Rand der zweiten leitfähigen Schicht kleiner als 10 mm ist.

3. Elektrochrome Vorrichtung nach Anspruch 1 oder 2, wobei ein Dyne-Wert der Lackschicht (9) minus eine Oberflächenspannung einer Aufschlämmung einer Strukturschicht in der festen farbveränderlichen Schicht kleiner oder gleich 0 mN/m ist, wobei die Strukturschicht die erste leitfähige Schicht oder die zweite leitfähige Schicht berührt.

4. Elektrochrome Vorrichtung nach einem der Ansprüche 1 bis 3, wobei ein Berührungswinkel θ zwischen einer Aufschlämmung einer Strukturschicht in der festen farbveränderlichen Schicht und der Lackschicht (9) größer oder gleich 30° ist, wobei die Strukturschicht die erste leitfähige Schicht oder die zweite leitfähige Schicht berührt.

5. Elektrochrome Vorrichtung nach einem der Ansprüche 1 bis 4, wobei ein Berührungswinkel θ zwischen einer Aufschlämmung einer Strukturschicht in der festen farbveränderlichen Schicht und der Lackschicht (9) größer oder gleich 40° ist, wobei die Strukturschicht die erste leitfähige Schicht oder die zweite leitfähige Schicht berührt.

6. Elektrochrome Vorrichtung nach einem der Ansprüche 1 bis 5, wobei leitfähige Linien auf der ersten leitfähigen Schicht und der zweiten leitfähigen Schicht angeordnet sind.

7. Elektrochrome Vorrichtung nach einem der Ansprüche 1 bis 6, wobei eine Breite der Lackschicht (9) größer oder gleich einer Breite der leitfähigen Linien ist und eine Dicke der Lackschicht (9) 1 µm-10 µm beträgt.

8. Elektrochrome Vorrichtung nach einem der Ansprüche 1 bis 7, wobei eine Breite der Lackschicht (9) größer oder gleich einer Breite der leitfähigen Linien und kleiner oder gleich 25 mm ist.

9. Elektrochrome Vorrichtung nach einem der Ansprüche 1 bis 8, wobei die feste farbveränderliche Schicht eine Ionenspeicherschicht (3), eine Ionentransferschicht (4) und eine elektrochrome Schicht (5) umfasst, die nacheinander gestapelt sind, die Ionenspeicherschicht (3) die erste leitfähige Schicht berührt und die elektrochrome Schicht die zweite leitfähige Schicht berührt
und eine erste Lackschicht (91) und eine zweite Lackschicht (92) an dem Randbereich der ersten leitfähigen Schicht beziehungsweise dem Randbereich der zweiten leitfähigen Schicht angeordnet sind, die erste Lackschicht (91) die Ionenspeicherschicht (3) berührt und die zweite Lackschicht (92) die elektrochrome Schicht berührt.

10. Elektrochrome Vorrichtung nach Anspruch 9, wobei die erste Lackschicht (91) und die leitfähige Linie auf der ersten leitfähigen Schicht nebeneinander mit direkter Berührung angeordnet sind, die zweite Lackschicht (92) und die leitfähige Linie auf der zweiten leitfähigen Schicht nebeneinander mit direkter Berührung angeordnet sind und die erste Lackschicht (91) und die zweite Lackschicht (92) fluchtend mit einem Rand der ersten leitfähigen Schicht beziehungsweise einem Rand der zweiten leitfähigen Schicht angeordnet sind
oder die erste Lackschicht (91) und die zweite Lackschicht (92) die leitfähige Linie auf der ersten leitfähigen Schicht beziehungsweise die leitfähige Linie auf der zweiten leitfähigen Schicht bedecken und die erste Lackschicht (91) und die zweite Lackschicht (92) fluchtend mit einem Rand der ersten leitfähigen Schicht beziehungsweise einem Rand der zweiten leitfähigen Schicht angeordnet sind.

11. Elektrochrome Vorrichtung nach Anspruch 9, wobei die elektrochrome Vorrichtung ferner eine Dichtung (10) umfasst, die an der Umfangsseite der elektrochromen Vorrichtung angeordnet ist.

12. Elektrochrome Vorrichtung nach Anspruch 11, wobei die Dichtung (10) eine Strukturklebeschicht (11) und eine Dichtungsklebeschicht (12), die sich an der äußeren Seite der Strukturklebeschicht (11) befindet, umfasst.

13. Elektrochrome Vorrichtung nach Anspruch 11, wobei die erste Lackschicht (91) und die leitfähige Linie auf der ersten leitfähigen Schicht nebeneinander mit direkter Berührung angeordnet sind, die zweite Lackschicht (92) und die leitfähige Linie auf der zweiten leitfähigen Schicht nebeneinander mit direkter Berührung angeordnet sind, die erste Lackschicht (91) und die zweite Lackschicht (92) fluchtend mit einem Rand der ersten leitfähigen Schicht beziehungsweise einem Rand der zweiten leitfähigen Schicht angeordnet sind und sich die Dichtung (10) zwischen der ersten Lackschicht (91) und der zweiten Lackschicht (92) befindet
oder die erste Lackschicht (91) und die zweite Lackschicht (92) die leitfähige Linie auf der ersten leitfähigen Schicht beziehungsweise die leitfähige Linie auf der zweiten leitfähigen Schicht bedecken, die erste Lackschicht (91) und die zweite Lackschicht (92) fluchtend mit einem Rand der ersten leitfähigen Schicht und einem Rand der zweiten leitfähigen Schicht angeordnet sind und sich die Dichtung (10) zwischen der ersten Lackschicht (91) und der zweiten Lackschicht (92) befindet.

14. Elektrochrome Vorrichtung nach Anspruch 11, wobei die erste Lackschicht (91) und die zweite Lackschicht (92) die leitfähige Linie auf der ersten leitfähigen Schicht beziehungsweise die leitfähige Linie auf der zweiten leitfähigen Schicht bedecken, Lücken zwischen der ersten Lackschicht (91) und einem Rand der ersten leitfähigen Schicht beziehungsweise zwischen der zweiten Lackschicht (92) und einem Rand der zweiten leitfähigen Schicht gebildet sind, die Dichtung (10) eine Strukturklebeschicht (11) und eine Dichtungsklebeschicht (12), die sich an der äußeren Seite der Strukturklebeschicht (11) befindet, umfasst, sich die Strukturklebeschicht (11) zwischen der ersten Lackschicht (91) und der zweiten Lackschicht (92) befindet, sich ein Teil der Dichtungsklebeschicht (12) zwischen der ersten Lackschicht (91) und der zweiten Lackschicht (92) befindet und der andere Teil der Dichtungsklebeschicht (12) in die Lücken gefüllt ist
oder die feste farbveränderliche Schicht eine Ionenspeicherschicht (3), eine Ionentransferschicht (4) und eine elektrochrome Schicht (5) umfasst, die nacheinander gestapelt sind, die Ionenspeicherschicht (3) die erste leitfähige Schicht berührt, die elektrochrome Schicht (5) die zweite leitfähige Schicht berührt, die erste Lackschicht (91) und die zweite Lackschicht (92) die leitfähige Linie auf der ersten leitfähigen Schicht beziehungsweise die leitfähige Linie auf der zweiten leitfähigen Schicht bedecken, die erste Lackschicht (91) und die zweite Lackschicht (92) fluchtend mit einem Rand der ersten leitfähigen Schicht beziehungsweise einem Rand der zweiten leitfähigen Schicht angeordnet sind, die Dichtung (10) eine Strukturklebeschicht (11) und eine Dichtungsklebeschicht (12), die sich an der äußeren Seite der Strukturklebeschicht (11) befindet, umfasst, sich die Dichtungsklebeschicht (12) zwischen der ersten Lackschicht (91) und der zweiten Lackschicht (92) befindet, sich ein Teil der Strukturklebeschicht (11) zwischen der ersten Lackschicht (91) und der zweiten Lackschicht (92) befindet und sich der andere Teil der Strukturklebeschicht (11) an einem Rand der Ionentransferschicht (4) befindet.

15. Elektrochrome Vorrichtung nach einem der Ansprüche 1 bis 14, wobei mindestens eine der ersten Substratschicht und der ersten leitfähigen Schicht eine transparente Strukturschicht ist und mindestens eine der zweiten leitfähigen Schicht und der zweiten Substratschicht eine transparente Strukturschicht ist.

## Revendications

1. Dispositif électrochromique, comprenant une première couche de substrat (1), une première couche conductrice (2), une couche à changement de couleur solide, une deuxième couche conductrice (6) et une deuxième couche de substrat (7) empilées en séquence ; dans lequel une couche de structure (3 ; 4) dans la couche à changement de couleur solide vient en contact avec la première couche conductrice (2) ou la deuxième couche conductrice (6), et
une couche de vernis (9 ; 91 ; 92) est disposée au niveau d'une région de bord de la première couche conductrice (2) et/ou au niveau d'une région de bord de la deuxième couche conductrice (6), **caractérisé en ce qu'**un niveau de dyne de la couche de vernis (9) diminué d'une tension de surface d'une suspension d'une couche de structure (3 ; 4) dans la couche à changement de couleur solide est inférieur ou égal à 5 mN/m.

2. Dispositif électrochromique selon la revendication 1, dans lequel la région de bord est une région présentant une distance par rapport au bord externe de la première couche conductrice ou au bord externe de la deuxième couche conductrice inférieure à 10 mm.

3. Dispositif électrochromique selon la revendication 1 ou 2, dans lequel un niveau de dyne de la couche de vernis (9) diminué d'une tension de surface d'une suspension d'une couche de structure dans la couche à changement de couleur solide est inférieur ou égal à 0 mN/m, dans lequel la couche de structure vient en contact avec la première couche conductrice ou la deuxième couche conductrice.

4. Dispositif électrochromique selon l'une quelconque des revendications 1 à 3, dans lequel un angle de contact θ entre une suspension d'une couche de structure dans la couche à changement de couleur solide et la couche de vernis (9) est supérieur ou égal à 30°, dans lequel la couche de structure vient en contact avec la première couche conductrice ou la deuxième couche conductrice.

5. Dispositif électrochromique selon l'une quelconque des revendications 1 à 4, dans lequel un angle de contact θ entre une suspension d'une couche de structure dans la couche à changement de couleur solide et la couche de vernis (9) est supérieur ou égal à 40°, dans lequel la couche de structure vient en contact avec la première couche conductrice ou la deuxième couche conductrice.

6. Dispositif électrochromique selon l'une quelconque des revendications 1 à 5, dans lequel des lignes conductrices sont disposées sur la première couche conductrice et la deuxième couche conductrice.

7. Dispositif électrochromique selon l'une quelconque des revendications 1 à 6, dans lequel, une largeur de la couche de vernis (9) est supérieure ou égale à une largeur des lignes conductrices, et une épaisseur de la couche de vernis (9) est de 1 µm - 10 µm.

8. Dispositif électrochromique selon l'une quelconque des revendications 1 à 7, dans lequel, une largeur de la couche de vernis (9) est supérieure ou égale à une largeur des lignes conductrices et inférieure ou égale à 25 mm.

9. Dispositif électrochromique selon l'une quelconque des revendications 1 à 8, dans lequel la couche à changement de couleur solide comprend une couche de stockage d'ions (3), une couche de transfert d'ions (4) et une couche électrochromique (5) empilées en séquence, la couche de stockage d'ions (3) vient en contact avec la première couche conductrice et la couche électrochromique vient en contact avec la deuxième couche conductrice ;
et, une première couche de vernis (91) et une deuxième couche de vernis (92) sont disposées au niveau de la région de bord de la première couche conductrice et de la région de bord de la deuxième couche conductrice, respectivement, la première couche de vernis (91) vient en contact avec la couche de stockage d'ions (3), et la deuxième couche de vernis (92) vient en contact avec la couche électrochromique.

10. Dispositif électrochromique selon la revendication 9, dans lequel la première couche de vernis (91) et la ligne conductrice sur la première couche conductrice sont disposées côte-à-côte avec une mise en contact directe, la deuxième couche de vernis (92) et la ligne conductrice sur la deuxième couche conductrice sont disposées côte-à-côte avec une mise en contact directe, et la première couche de vernis (91) et la deuxième couche de vernis (92) sont alignées sur un bord de la première couche conductrice et un bord de la deuxième couche conductrice, respectivement ;
ou, la première couche de vernis (91) et la deuxième couche de vernis (92) recouvrent la ligne conductrice sur la première couche conductrice et la ligne conductrice sur la deuxième couche conductrice, respectivement, et la première couche de vernis (91) et la deuxième couche de vernis (92) sont alignées sur un bord de la première couche conductrice et un bord de la deuxième couche conductrice, respectivement.

11. Dispositif électrochromique selon la revendication 9, dans lequel le dispositif électrochromique comprend en outre un joint d'étanchéité (10) disposé sur le côté périphérique du dispositif électrochromique.

12. Dispositif électrochromique selon la revendication 11, dans lequel le joint d'étanchéité (10) comprend une couche adhésive structurelle (11) et une couche adhésive d'étanchéité (12) située sur le côté externe de la couche adhésive structurelle (11).

13. Dispositif électrochromique selon la revendication 11, dans lequel la première couche de vernis (91) et la ligne conductrice sur la première couche conductrice sont disposées côte-à-côte avec une mise en contact directe, la deuxième couche de vernis (92) et la ligne conductrice sur la deuxième couche conductrice sont disposées côte-à-côte avec une mise en contact directe, la première couche de vernis (91) et la deuxième couche de vernis (92) sont alignées sur un bord de la première couche conductrice et un bord de la deuxième couche conductrice, respectivement, et le joint d'étanchéité (10) est situé entre la première couche de vernis (91) et la deuxième couche de vernis (92) ;
ou, la première couche de vernis (91) et la deuxième couche de vernis (92) recouvrent la ligne conductrice sur la première couche conductrice et la ligne conductrice sur la deuxième couche conductrice, respectivement, la première couche de vernis (91) et la deuxième couche de vernis (92) sont alignées sur un bord de la première couche conductrice et un bord de la deuxième couche conductrice, et le joint d'étanchéité (10) est situé entre la première couche de vernis (91) et la deuxième couche de vernis (92).

14. Dispositif électrochromique selon la revendication 11, dans lequel la première couche de vernis (91) et la deuxième couche de vernis (92) recouvrent la ligne conductrice sur la première couche conductrice et la ligne conductrice sur la deuxième couche conductrice, respectivement, des espaces sont formés entre la première couche de vernis (91) et un bord de la première couche conductrice et entre la deuxième couche de vernis (92) et un bord de la deuxième couche conductrice, respectivement, le joint d'étanchéité (10) comprend une couche adhésive structurelle (11) et une couche adhésive d'étanchéité (12) située sur le côté externe de la couche adhésive structurelle (11), la couche adhésive structurelle (11) est située entre la première couche de vernis (91) et la deuxième couche de vernis (92), une partie de la couche adhésive d'étanchéité (12) est située entre la première couche de vernis (91) et la deuxième couche de vernis (92), et l'autre partie de la couche adhésive d'étanchéité (12) est remplie dans les espaces ;
ou, la couche à changement de couleur solide comprend une couche de stockage d'ions (3), une couche de transfert d'ions (4) et une couche électrochromique (5) empilées en séquence, la couche de stockage d'ions (3) vient en contact avec la première couche conductrice, la couche électrochromique (5) vient en contact avec la deuxième couche conductrice, la première couche de vernis (91) et la deuxième couche de vernis (92) recouvrent la ligne conductrice sur la première couche conductrice et la ligne conductrice sur la deuxième couche conductrice, respectivement, la première couche de vernis (91) et la deuxième couche de vernis (92) sont alignées sur un bord de la première couche conductrice et un bord de la deuxième couche conductrice, respectivement, le joint d'étanchéité (10) comprend une couche adhésive structurelle (11) et une couche adhésive d'étanchéité (12) située sur le côté externe de la couche adhésive structurelle (11), la couche adhésive d'étanchéité (12) est située entre la première couche de vernis (91) et la deuxième couche de vernis (92), une partie de la couche adhésive structurelle (11) est située entre la première couche de vernis (91) et la deuxième couche de vernis (92), et l'autre partie de la couche adhésive structurelle (11) est située au niveau d'un bord de la couche de transfert d'ions (4).

15. Dispositif électrochromique selon l'une quelconque des revendications 1 à 14, dans lequel au moins l'une parmi la première couche de substrat et la première couche conductrice est une couche structurelle transparente, et au moins l'une parmi la deuxième couche conductrice et la deuxième couche de substrat est une couche structurelle transparente.
